# FASCICULE DE BREVET EUROPEEN

(11) **EP 3 174 386 B1**
(45) Date de publication et mention de la délivrance du brevet: **15.04.2020**
(21) Numéro de dépôt: 15744181.7
(22) Date de dépôt: 27.07.2015
(51) Int. Cl.: A01K 11/00

(54) **SYSTÈME D'IDENTIFICATION ANIMALE COMPRENANT UN DISPOSITIF D'IDENTIFICATION ANIMALE ET UN ORGANE DE PRÉLÈVEMENT**
TIERIDENTIFIZIERUNGSSYSTEM MIT EINER TIERIDENTIFIZIERUNGSVORRICHTUNG UND EINEM PROBEELEMENT
ANIMAL IDENTIFICATION SYSTEM COMPRISING AN ANIMAL IDENTIFICATION DEVICE AND A SAMPLING MEMBER

(30) Priorité: 31.07.2014 FR 1457457; 10.03.2015 FR 1551996
(43) Date de publication de la demande: 07.06.2017
(73) Titulaire: Allflex Europe, 35500 Vitré (FR)
(72) Inventeur: HILPERT, Jean-Jacques, 35500 Vitre (FR); DECALUWE, Johan, 53000 Laval (FR)
(74) Mandataire: Vidon Brevets & Stratégie
(86) Numéro de dépôt international: PCT/EP2015/067190
(87) Numéro de publication internationale: WO 2016/016204

(56) Documents cités:
- EP-A2- 0 014 584
- WO-A1-02/080661
- WO-A1-03/037075
- WO-A1-2011/154510
- DE-U1- 20 022 647
- FR-A1- 2 929 804

## Description

### 1. Domaine de l'invention

Le domaine de l'invention est celui de l'identification et/ou du marquage des animaux.

Plus précisément, l'invention concerne un système d'identification animale permettant d'apposer une marque d'identification visuelle et/ou électronique sur toute espèce animale, et de prélever un échantillon de tissu de l'animal.

En particulier, l'invention concerne la partie mâle d'une marque d'identification animale, encore appelée dispositif d'identification animale, comprenant un canal longitudinal traversant permettant le passage d'un organe de prélèvement de tissus.

Un tel prélèvement de tissu permet notamment de conserver des cellules/tissus portant des caractéristiques biologiques ou biochimiques de l'animal, par exemple pour identifier ultérieurement l'animal ou détecter des maladies de l'animal.

### 2. Art antérieur

Afin notamment d'améliorer le suivi du cheptel, améliorer la productivité (en éliminant les animaux malades, ou en recherchant des caractéristiques génétiques singulières par exemple), et/ou garantir l'origine des animaux destinés à la consommation (par exemple en détectant des maladies), il est de plus en plus souvent procédé à un ou plusieurs prélèvements de tissu des animaux concernés.

Un tel prélèvement peut être effectué sur l'animal lors de la pose d'une marque d'identification de l'animal (à la naissance par exemple). D'autres prélèvements peuvent également être effectués tout au long de l'existence de l'animal, par exemple pour détecter des maladies ou certifier l'identité de l'animal, par comparaison des séquences ADN, ou évaluer sa valeur génétique. Une fois collecté, l'échantillon de tissu animal peut donc être stocké et/ou transmis à un laboratoire pour analyse.

Lorsque le prélèvement est effectué simultanément à la pose de la marque, il est connu d'utiliser une partie mâle présentant un canal longitudinal entièrement traversant, permettant le passage d'un organe de prélèvement de tissus, voir par exemple le document WO 02/080661 A1.

Selon cet exemple, la partie mâle comprend un fût s'étendant à partir d'un support, et se terminant par une pointe tronquée. Le fût (y compris la pointe tronquée) est creux, et définit un canal longitudinal, permettant le passage d'une aiguille de prélèvement.

Cette aiguille de prélèvement, fixée à une mâchoire de la pince de pose grâce à un support de fixation, peut être retirée après la mise en place de la marque. Elle présente une arête coupante, de forme généralement circulaire, dépassant en saillie de l'extrémité du fût mâle, de façon à perforer la peau de l'animal lors de la mise en place de la marque.

Lors de la mise en place de la marque, l'aiguille perfore donc la peau de l'animal, puis guide la pointe du fût dans une cavité d'une partie femelle, de façon à assembler de manière irréversible les parties mâle et femelle.

Une fois la marque mise en place, il est possible de retirer l'aiguille en la faisant coulisser hors du fût, et de récupérer l'échantillon de tissus découpé par l'arête coupante, resté dans l'aiguille.

Ces marques de l'art antérieur sont préférentiellement réalisées en plastique souple ou flexible, afin de gêner le moins possible l'animal dans ses mouvements, et éviter qu'il se blesse. L'utilisation d'un matériau déformable permet en effet d'éviter un déchirement de l'oreille de l'animal, pouvant par exemple survenir lorsque la marque apposée à l'oreille de l'animal se coince dans une clôture, une branche, etc.

Un inconvénient de ces marques est que la souplesse, souhaitable au niveau de la marque, pose des problèmes pour la pose de la marque et/ou le prélèvement de tissus. En effet, le fût peut se déformer lors de la mise en place de la marque, du fait du matériau déformable qui est utilisé. Plus précisément, le fût a tendance se compresser lorsque la pointe tronquée entre en contact avec l'animal. Le fût se déforme notamment par flambage, en générant des plis. Le fût pénètre alors plus difficilement dans la partie femelle au niveau des plis, et l'inviolabilité de la marque ne peut plus être totalement garantie. L'extrémité formant pointe du fût peut aussi ne pas réussir à pénétrer dans la partie femelle. La marque est alors inutilisable. Par ailleurs, les plis peuvent gêner la cicatrisation de l'oreille de l'animal.

Ce problème n'existe pas dans le domaine des marques ne permettant pas de prélèvement de tissus. En effet, pour ce type de marques, un pointeau, généralement métallique, et solidarisé à un outil de pose, est inséré dans le fût de la partie mâle de la marque, de façon à rigidifier le fût lors de la pose de la marque.

Cette approche n'est cependant pas applicable aux marques présentant un fût creux (i.e. un canal longitudinal entièrement traversant) et prévu pour le prélèvement de tissus.

Il existe donc un besoin pour un nouveau type de marque pour le prélèvement de tissus permettant de s'affranchir de ce problème de déformation du fût, tout en permettant de gêner l'animal le moins possible dans ses mouvements, et d'éviter qu'il se blesse.

### 3. Exposé de l'invention

L'invention propose une solution nouvelle qui ne présente pas l'ensemble de ces inconvénients de l'art antérieur, sous la forme d'une partie mâle d'un dispositif d'identification animale comprenant un fût s'étendant à partir d'un support et se terminant par une tête de verrouillage destinée à être insérée dans une partie femelle pour fixer le dispositif d'identification à un animal.

Selon l'invention, le fût est traversé par un canal longitudinal permettant le passage d'un organe de prélèvement de tissus animal et comprend des moyens de rigidification aptes à rigidifier le fût selon son axe longitudinal. De tels moyens de rigidification comprennent au moins un élément de butée saillant dans le canal, localisé entre le milieu du fût et l'extrémité distale de la tête (i.e. opposée à la base de la tête), le ou les élément(s) de butée définissant une zone d'appui sur laquelle au moins un élément d'appui de l'organe de prélèvement peut prendre appui lors d'un prélèvement de tissus animal.

L'invention propose ainsi une solution nouvelle pour la partie mâle des marques/dispositifs d'identification animale utilisé(e)s pour prélever du tissu animal et poser simultanément la marque, permettant d'optimiser la pose de la marque.

Plus précisément, l'invention prévoit des moyens adaptés pour rigidifier le fût selon son axe longitudinal, sans nuire à sa fonction principale de prélèvement. De tels moyens de rigidification sont configurés pour prévenir temporairement une déformation du fût selon son axe longitudinal, depuis la tête de verrouillage vers le support, lors de la mise en place de la marque. De tels moyens de rigidification comprennent au moins un élément de butée, prenant par exemple la forme d'un ergot, d'un rétrécissement du canal, etc.

L'invention permet ainsi d'éviter que le fût se déforme par flambage lors de la pose de la marque, en générant des plis ou bourrelets autour de l'organe de prélèvement destiné à percer la peau de l'animal (peau et cartilage de l'oreille par exemple).

De cette façon, la plaie de l'animal peut cicatriser plus vite, puisque la circulation de l'air n'est pas gênée par la présence de ces plis. De plus, le fût de la partie mâle peut s'emboîter sur une longueur suffisante dans la partie femelle, de façon à assurer une fermeture correcte et l'inviolabilité de la marque.

Selon une caractéristique de l'invention, le corps du fût est réalisé en un matériau au moins partiellement déformable (par exemple en polyuréthane).

De ce fait, le corps du fût, situé entre le support et la base de la tête de verrouillage, se trouve rigidifié uniquement lors de l'opération de pose de la marque/prélèvement de tissus. Une fois ces opérations réalisées, l'organe de prélèvement est retiré du fût de la partie mâle, qui retrouve donc sa souplesse/flexibilité.

La tête de verrouillage, qui prend classiquement la forme d'une pointe tronquée, est de préférence réalisée dans un matériau non déformable, de façon à empêcher son retrait après insertion dans la partie femelle.

On peut noter que le support, à partir duquel s'étend sensiblement perpendiculairement le fût, peut également être réalisé en un matériau au moins partiellement déformable. De cette façon, le support (qui peut être de plus ou moins grande taille) est déformable, ce qui permet d'éviter un déchirement de la peau de l'animal (oreille par exemple), pouvant survenir lorsque le support se coince dans une clôture, une branche, etc.

Selon un mode de réalisation particulier, le canal comprend au moins deux portions de sections distinctes, et l'élément de butée correspond à la zone de jonction entre les portions de sections distinctes.

En particulier, les portions de sections distinctes du canal sont cylindriques et concentriques.

La zone de jonction définit donc une surface en forme de couronne, sur laquelle au moins un élément d'appui de l'organe de prélèvement peut prendre appui pour rigidifier le corps du fût mâle.

En particulier, la portion localisée avant la zone de jonction présente une section circulaire de diamètre supérieur à la portion localisée après la zone de jonction, en allant du support vers la tête de verrouillage de la partie mâle.

Selon ce mode de réalisation particulier, l'épaisseur du matériau formant le corps du fût au niveau des portions de sections distinctes peut être sensiblement constante.

De cette façon, l'enveloppe externe du fût mâle suit la forme du canal, et le fût mâle présente, le long de son corps, au moins deux portions de sections différentes.

L'épaisseur du fût mâle est donc sensiblement constante, entre le support à partir duquel il s'étend et la base de la tête de verrouillage, ce qui permet de limiter la quantité de matière utilisée pour réaliser le fût.

En particulier, la distance entre la tête et la zone de jonction est adaptée de façon que le matériau formant le corps du fût au niveau de la zone de jonction vienne en butée contre la base de la partie femelle lorsque les parties mâle et femelle sont emboitées.

Le fût mâle définit ainsi une zone de blocage entre la base de la tête de verrouillage et la zone de jonction, permettant de bloquer un anneau de retenue présent au niveau de l'orifice d'entrée de la partie femelle.

On assure ainsi un meilleur blocage de la partie mâle dans la partie femelle.

En variante, l'épaisseur du matériau formant le corps du fût au niveau de la portion localisée avant la zone de jonction est inférieure à l'épaisseur du matériau formant le corps du fût au niveau de la portion localisée après la zone de jonction, en allant du support vers la tête de verrouillage de la partie mâle.

De cette façon, le corps du fût mâle présente une forme/enveloppe externe sensiblement cylindrique.

Selon un autre mode de réalisation particulier, la tête de verrouillage comprend un insert présentant une dureté supérieure à celle du matériau formant le corps du fût.

L'insert est de ce fait réalisée dans un matériau non déformable, de façon à empêcher le retrait de la tête de verrouillage après son insertion dans la partie femelle, et améliorer l'inviolabilité de la marque.

Comme déjà indiqué, le reste du fût et/ou le support peuvent quant à eux être réalisés dans un matériau déformable.

En particulier, l'insert est un cône tronqué, dont une partie de la base définit la zone de jonction.

Un tel insert est notamment traversé par le canal longitudinal permettant le passage d'un organe de prélèvement de tissus animal.

Selon une autre caractéristique particulière, l'insert comprend au moins un évidement.

Il est ainsi aisé de réaliser la partie mâle, par exemple en surmoulant le fût (et éventuellement le support du fût) sur l'insert. Le matériau utilisé pour le fût, par exemple du polyuréthane, peut couler dans le ou les évidements de l'insert, de façon à solidariser l'insert au reste du fût.

En particulier, le support à partir duquel s'étend le fût comprend une surface de marquage, portant un identifiant de l'animal. Afin d'être visible, cette surface de marquage est préférentiellement prévue sur la face du support tournée vers l'extérieur, c'est-à-dire orientée du côté opposé au fût mâle.

Par exemple, un tel support peut prendre la forme d'un disque, ou comprendre un prolongement définissant une surface de marquage sensiblement rectangulaire de grande dimension pour les bovins, ou de petite dimension pour les ovins, selon des caractéristiques connues de l'Homme du Métier. Ainsi, le support peut être de plus ou moins grande taille, en fonction du type d'animal sur lequel sera apposée la marque.

L'identifiant de l'animal peut être un identifiant visuel, prenant par exemple la forme d'un code alphanumérique, d'un code barre, d'une matrice, etc, et/ou un identifiant électronique, tel qu'un transpondeur ou analogue.

L'invention concerne également un organe de prélèvement apte à être au moins partiellement inséré dans le canal longitudinal du fût d'une partie mâle telle que décrite ci-dessus.

Selon l'invention, un tel organe de prélèvement comprend au moins un élément d'appui complémentaire de l'élément de butée de la partie mâle.

En particulier, la distance entre l'élément d'appui et l'extrémité distale de prélèvement de l'organe de prélèvement est définie de sorte que l'extrémité distale de prélèvement dépasse en saillie du fût de la partie mâle lorsque l'élément d'appui est en appui contre l'élément de butée.

En d'autres termes, la distance entre l'élément d'appui et l'extrémité distale de prélèvement de l'organe de prélèvement est légèrement supérieure (de l'ordre de 2 mm) à la distance entre l'élément de butée et l'extrémité distale de la tête de verrouillage de la partie mâle.

On note qu'un tel organe de prélèvement comprend un élément de prélèvement de type aiguille de biopsie, pointeau se terminant par une pointe, ou tout autre élément permettant de prélever un échantillon de tissus. L'extrémité distale de prélèvement correspond à l'arête coupante de l'aiguille, à l'extrémité de la pointe, etc. On appelle par la suite « aiguille » un tel élément de prélèvement.

Par exemple, ledit élément d'appui est une bague solidarisée à l'aiguille dudit organe de prélèvement.

Avantageusement, un tel organe comprend également un support de fixation, permettant de manipuler l'aiguille, et de la solidariser à l'outil de pose pour l'opération de prélèvement.

Eventuellement, un tel organe de prélèvement comprend également un élément poussoir, logé dans le canal longitudinal de l'aiguille, permettant de pousser l'échantillon de tissus hors de l'aiguille une fois le prélèvement réalisé.

Un élément d'appui selon l'invention peut être une partie du support de fixation, un ou plusieurs ergots prévus au niveau de l'aiguille ou du support, une surépaisseur de l'aiguille, etc.

Dans un autre mode de réalisation, l'invention concerne un système d'identification animale, comprenant :
- un dispositif d'identification animale comprenant :
   - une partie mâle telle que décrite ci-dessus,
   - une partie femelle comprenant une cavité destinée à recevoir la tête de verrouillage de la partie mâle, et
- un organe de prélèvement tel que décrit ci-dessus.

Ce système pourra bien sûr comporter les différentes caractéristiques relatives à la partie mâle d'un dispositif d'identification selon l'invention ou à l'organe de prélèvement selon l'invention, qui peuvent être combinées ou prises isolément. Ainsi, les caractéristiques et avantages de ce système sont les mêmes que ceux de le partie mâle et de l'organe de prélèvement décrits ci-dessus. Par conséquent, ils ne sont pas détaillés plus amplement.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un premier mode de réalisation d'une partie mâle d'un dispositif d'identification animale selon l'invention ;
- la figure 2 présente un exemple d'organe de prélèvement destiné à être inséré au moins partiellement dans une partie mâle selon la figure 1 ;
- les figures 3A à 3D illustrent les différents éléments d'un système d'identification animale selon un deuxième mode de réalisation ;
- les figures 4A à 4F présentent une partie mâle d'un dispositif d'identification animale et un organe de prélèvement selon un troisième mode de réalisation de l'invention.

### 5. Description d'un mode de réalisation de l'invention

Le principe général de l'invention repose sur une rigidification temporaire d'une partie mâle d'un dispositif d'identification animale, permettant de rigidifier le fût de la partie mâle selon son axe longitudinal lors des opérations de prélèvement de tissus animal et de mise en place du dispositif d'identification.

De tels moyens de rigidification selon l'invention sont configurés pour prévenir une déformation du fût selon son axe longitudinal depuis la tête de verrouillage vers le support.

De cette façon, le fût de la partie mâle ne subit pas, ou très peu, de déformation lors de la pose de la marque. On limite ainsi les risques de mauvais emboîtement des parties mâle et femelle ou de mauvaise cicatrisation de l'oreille, dus à la présence de « plis » au niveau du fût.

On note que cette rigidification est temporaire. De cette façon, le support et le corps de la partie mâle peuvent être réalisés dans un matériau déformable. Ainsi, lors des opérations de prélèvement de tissus animal/mise en place du dispositif d'identification, le fût est renforcé pour prévenir une déformation du fût selon son axe longitudinal. Une fois la marque posée, on limite ainsi les risques de déchirement de l'oreille de l'animal par exemple, lorsque la marque se coince dans une clôture ou autre, le support ou le corps du fût pouvant se déformer aisément dans le cadre des sollicitations usuelles.

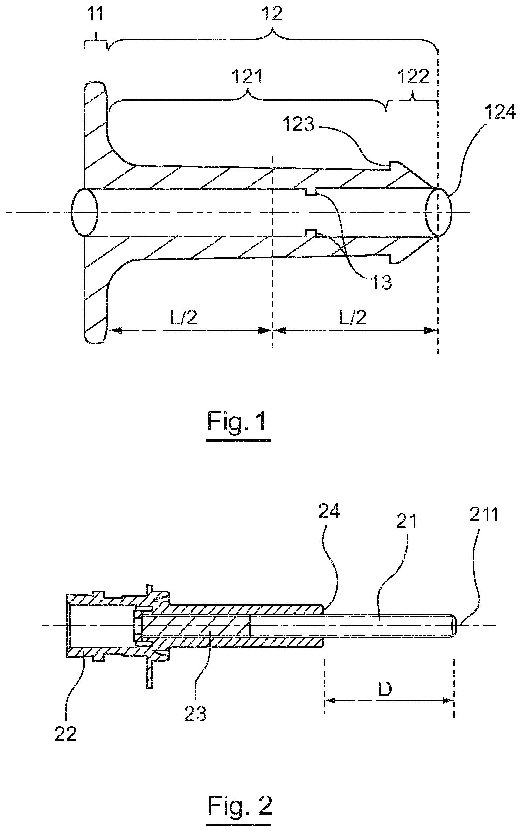

On présente désormais, en relation avec la figure 1, un premier mode de réalisation d'une partie mâle selon l'invention.

Une telle partie mâle comprend un fût 12, s'étendant perpendiculairement (ou sensiblement perpendiculairement) à partir d'un support 11, destiné à prendre appui par exemple sur une première face de l'oreille d'un animal. Un tel fût 12 comprend un corps 121 et une tête de verrouillage 122. Le corps 121 est classiquement de forme cylindrique ou tronconique. La tête 122 prend classiquement la forme d'une pointe tronquée ou d'un cône tronqué. Au niveau de sa base 123, la tête 122 définit un épaulement permettant de sécuriser la tête de la partie mâle dans une cavité de la partie femelle, lorsque le dispositif d'identification est fixé à l'animal.

On considère selon l'invention que le fût 12 est entièrement traversé par un canal longitudinal permettant le passage d'un organe de prélèvement de tissus animal.

Selon l'invention, le fût 12 comprend des moyens de rigidification, permettant de le rigidifier dans son sens longitudinal, comprenant au moins un élément de butée 13 saillant dans le canal, localisé(s) entre le milieu du fût et l'extrémité distale 124 de la tête. Un élément de butée 13 prend par exemple la forme d'un ergot définissant une zone d'appui sur laquelle au moins un élément d'appui de l'organe de prélèvement peut prendre appui lors d'un prélèvement de tissus animal.

De cette façon, on définit une zone d'appui plus proche de l'extrémité 124 du fût que du support 11, ce qui permet de diminuer, voire supprimer, la longueur de compression du fût lors des opérations de pose de la marque/prélèvement.

Plus précisément, si le fût présente une longueur L entre le support 11 et l'extrémité distale 124 de la tête, alors le ou les éléments de butée 13 sont situés à égale distance du support 11, et à une distance du support 11 au moins égale à L/2. Préférentiellement, le ou les éléments de butée sont situés à une distance maximale de L/10 de l'extrémité distale 124 de la tête de verrouillage.

De cette façon, il est possible d'utiliser une partie mâle réalisée principalement, voire totalement, dans un matériau déformable, ce qui permet notamment d'éviter les problèmes de coincement de la marque d'identification et de déchirement de l'oreille.

Le prélèvement peut être effectué en insérant un organe de prélèvement, tel qu'illustré en figure 2, dans le canal longitudinal de la partie mâle illustrée en figure 1.

Par exemple, un tel organe de prélèvement comprend :
- un élément de prélèvement 21, par exemple de type aiguille de biopsie, destiné à perforer les tissus de l'animal pour en prélever un échantillon, et dont l'extrémité distale 211 présente une arête coupante, de forme généralement circulaire ;
- un support de fixation 22, par exemple en plastique rigide, permettant de manipuler l'aiguille et de la solidariser à une mâchoire d'un outil de pose pour les opérations de prélèvement et de pose de la marque ;
- éventuellement un élément poussoir 23, qui peut être guidé en translation à l'intérieur de l'aiguille 21 pour pousser l'échantillon prélevé hors de l'aiguille 21, une fois le prélèvement effectué.

Selon l'invention, un tel organe de prélèvement comprend au moins un élément d'appui 24 complémentaire de l'élément de butée 13 de la partie mâle. En particulier, la distance D entre le ou les éléments d'appui 24 et l'extrémité distale de prélèvement 211 de l'organe de prélèvement est définie de sorte que l'extrémité distale de prélèvement dépasse en saillie du fût 12 lorsque le ou les éléments d'appui 24 sont en appui contre le ou les éléments de butée 13.

De cette façon, lors de la mise en place de la marque et du prélèvement de tissus, l'organe de prélèvement peut assurer les opérations de découpe de tissus et de rétention de tissus. De plus, lorsque l'élément d'appui de l'organe de prélèvement vient en butée contre l'élément de butée de la partie mâle, l'organe de prélèvement transmet un effort à la partie mâle, permettant l'insertion de la tête de verrouillage 122 dans la partie femelle.

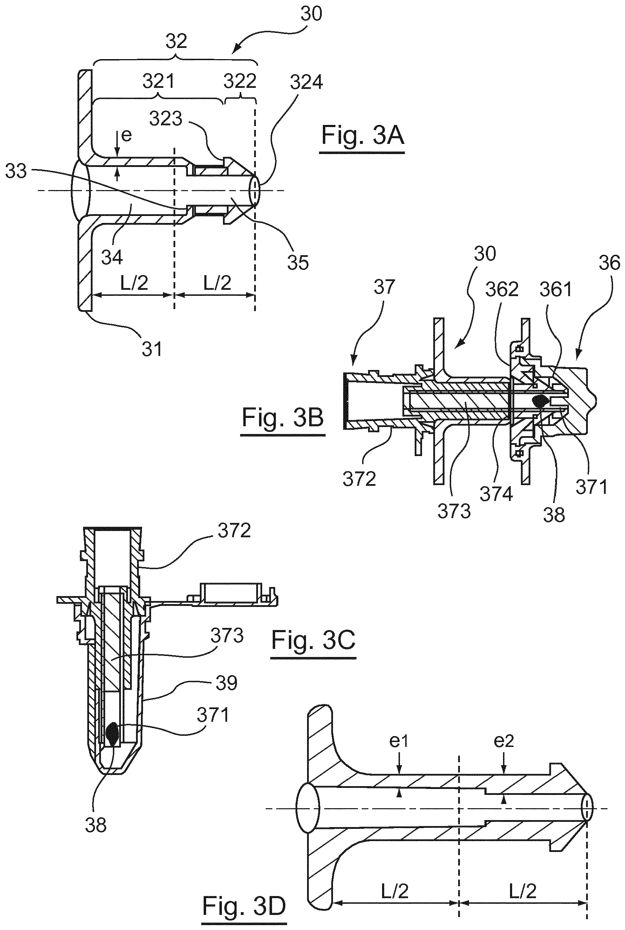

On présente désormais, en relation avec les figures 3A à 3C, un deuxième mode de réalisation de l'invention.

Selon ce deuxième mode de réalisation, une partie mâle 30 comprend un fût 32 s'étendant à partir d'un support 31. Le fût comprend un corps 321 et une tête 322. Le canal longitudinal du fût 32 comprend deux portions 34 et 35 sensiblement cylindriques et concentriques, de sections distinctes. En particulier, la zone de jonction 33 entre les portions 34 et 35 de sections distinctes définit un élément de butée, formant une zone d'appui dans le fût sur laquelle au moins un élément d'appui de l'organe de prélèvement peut prendre appui lors d'un prélèvement de tissus animal.

Plus spécifiquement, la première portion 34, située entre le support 31 et la zone de jonction 33 présente une section circulaire d'un premier diamètre strictement supérieur au deuxième diamètre de la deuxième portion 35 située entre la zone de jonction 33 et l'extrémité distale de la tête 324.

Par exemple, le premier diamètre est de l'ordre de 3,6 mm et le deuxième diamètre est de l'ordre de 5,6 mm.

La zone de jonction 33 définit ainsi une couronne sur laquelle au moins un élément d'appui de l'organe de prélèvement peut prendre appui.

A nouveau, en notant L la longueur totale du fût, la zone de jonction 33 entre les portions 34 et 35 de sections distinctes doit être située à une distance du support 31 au minimum égale à L/2. Préférentiellement, la zone de jonction 33 entre les portions 34 et 35 de sections distinctes est située à une distance maximale de L/10 de l'extrémité distale 324 de la tête.

En particulier, l'épaisseur *e* du matériau formant le corps 321 du fût au niveau des première et deuxième portions est sensiblement constante, par exemple de l'ordre de 1 mm.

De cette façon, l'enveloppe externe du corps 321 du fût suit la forme du canal longitudinal.

Selon une variante, illustrée en figure 3D, l'épaisseur du matériau formant le corps du fût au niveau de la portion localisée avant la zone de jonction, notée e1, est inférieure à l'épaisseur du matériau formant le corps du fût au niveau de la portion localisée après la zone de jonction, notée e2, en allant du support vers la tête de verrouillage de la partie mâle.

De cette façon, l'enveloppe externe du corps 321 du fût est sensiblement cylindrique.

La figure 3B illustre plus précisément un système d'identification selon l'invention, comprenant une partie mâle 30 telle que décrite ci-dessus, une partie femelle 36, et un organe de prélèvement 37.

Un tel organe de prélèvement 37 comprend :
- une aiguille 371, de type aiguille de biopsie ;
- un support de fixation 372 ;
- éventuellement un élément poussoir 373 ;
- un élément d'appui 374.

La partie femelle 36 comprend quant à elle un bouton de réception présentant une cavité 361 pour l'introduction de la tête de verrouillage 322 de la partie mâle 30. En particulier, la partie femelle 36 comprend un anneau de retenue 362, au niveau de l'orifice d'entrée de la partie femelle. Un tel anneau de retenue 362 comprend par exemple des lamelles flexibles, permettant l'insertion de la tête de verrouillage dans la cavité de la partie femelle et empêchant son retrait.

Lors de la mise en place de la marque et du prélèvement, l'aiguille 371 perfore la peau de l'animal le long d'une ligne de contact circonférentielle, puis guide la tête de verrouillage 322 du fût de la partie mâle dans le bouton de réception de la partie femelle, de façon à emboîter les parties mâle 30 et femelle 36.

Les dimensions de la partie mâle 30 sont telles que lorsque l'organe de prélèvement est inséré dans le canal longitudinal, et vient en butée sur la zone d'appui définie par la zone de jonction 33, au niveau de l'élément d'appui 374, l'extrémité de l'aiguille creuse 371 dépasse en saillie de l'extrémité 324 du fût 32, de façon à découper les tissus de l'animal.

On assure de cette façon la rigidité du fût 32 de la partie mâle lors de l'opération de prélèvement/pose de la marque.

En particulier, la distance entre la tête de verrouillage (base 323 de la tête ou extrémité distale 324) et la zone de jonction 33 est adaptée de façon que le matériau formant le corps du fût au niveau de la zone de jonction vienne en butée contre la base de la partie femelle, lorsque les parties mâle et femelle sont emboitées. Le corps 321 du fût mâle définit ainsi une zone de blocage entre la base 323 de la tête de verrouillage et la zone de jonction 33, permettant de bloquer l'anneau de retenue 362 et renforçant l'inviolabilité de la marque.

Une fois la marque mise en place, il est possible de retirer l'organe de prélèvement 37 en le faisant coulisser hors du fût 32, et de récupérer l'échantillon de tissus 38 présent dans l'aiguille 371.

En particulier, comme illustré en figure 3C, l'aiguille 371 portant l'échantillon de tissus 38 peut être introduite dans un tube d'échantillon 39. Un pointeau (par exemple un pointeau de l'outil de pose) peut venir pousser l'élément poussoir 373, de façon à extraire l'échantillon de tissus 38 de l'aiguille 371.

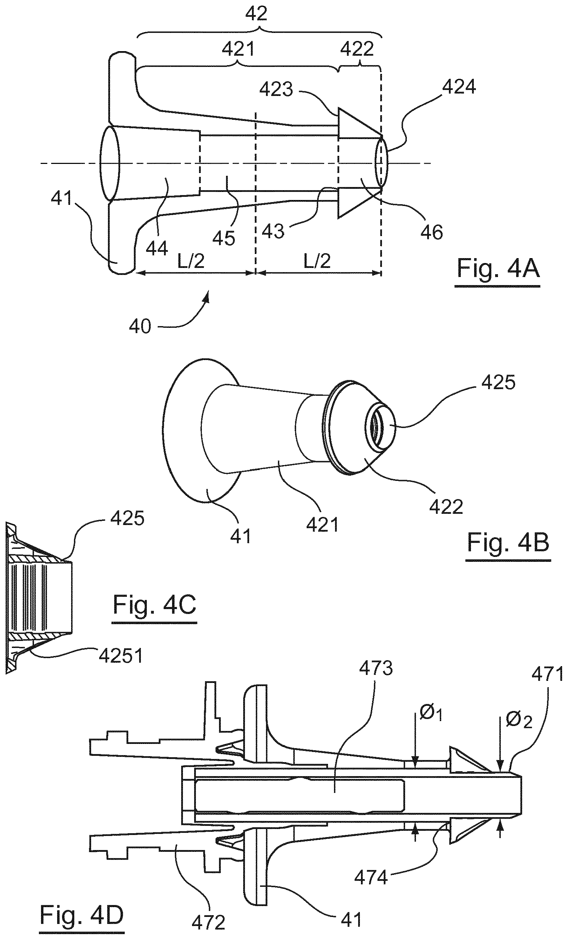

On présente désormais, en relation avec les figures 4A à 4F, un troisième mode de réalisation de l'invention, qui peut être combiné avec les modes de réalisation décrits précédemment.

Selon ce mode de réalisation, le canal longitudinal du fût 42 de la partie mâle 40 comprend trois portions successives 44, 45 et 46 de sections distinctes. La première portion 44 est de forme sensiblement tronconique. Les deuxième 45 et troisième 46 portions sont de forme sensiblement cylindriques. Les trois portions 44, 45 et 46 sont concentriques.

En particulier, la zone de jonction 43 entre les deuxième 45 et troisième 46 portions définit un élément de butée, formant une zone d'appui en forme de couronne dans le fût sur laquelle au moins un élément d'appui de l'organe de prélèvement peut prendre appui lors d'un prélèvement de tissus animal.

Une telle zone de jonction 43 est localisée à la base 423 de la tête de verrouillage, au niveau de la jonction entre le corps 421 du fût et la tête 422 du fût. Elle est donc localisée à une distance supérieure à L/2 par rapport au support 41, où L est la longueur totale du fût. En d'autres termes, la zone d'appui est localisée au plus près de l'extrémité 424 du fût.

Plus spécifiquement, selon ce mode de réalisation, la tête de verrouillage 422 comprend un insert 425, présentant une dureté supérieure à celle du matériau formant le corps 421 du fût. Par exemple, un tel insert 425 peut être un insert métallique, ou un insert plastique présentant une dureté de l'ordre de 50 à 70 shore D, alors que le corps 421 du fût et le support 41 présentent une dureté de l'ordre de 42 à 55 shore D.

Un tel insert 425 prend par exemple la forme d'un cône tronqué, traversé par le canal longitudinal. Une partie de la base d'un tel cône définit la zone de jonction 43.

En particulier, comme illustré en figure 4C, un tel insert comprend au moins un évidemment 4251, dans lequel la matière utilisée pour réaliser le fût peut couler lors du moulage de la partie mâle. De cette façon, l'insert est parfaitement solidarisé au fût.

De plus, l'utilisation d'un tel insert permet d'assurer une bonne tenue de la tête 422 dans la partie femelle, une fois la partie mâle insérée dans la partie femelle.

La figure 4D illustre un premier exemple d'organe de prélèvement, inséré dans la partie mâle 40.

Un tel organe de prélèvement comprend :
- une aiguille 471, de type aiguille de biopsie ;
- un support de fixation 472 ;
- un élément poussoir 473 ;
- un élément d'appui 474.

Selon l'exemple illustré en figure 4D, l'aiguille 471 comprend deux portions cylindriques, dont une première portion présentant une section circulaire de diamètre externe 0̸1 et une deuxième portion présentant une section circulaire de diamètre externe 0̸2, avec 0̸1 > 0̸2. La zone de jonction entre les première et deuxième portions définit l'élément d'appui 474.

Un tel élément d'appui 474 est complémentaire de l'élément de butée 43 de la partie mâle. L'insert 425 crée donc un épaulement rigide sur lequel l'aiguille peut prendre appui.

En particulier, la distance D entre l'élément d'appui 474 et l'extrémité distale de l'aiguille 471 est définie de sorte que l'extrémité distale de l'aiguille 471 dépasse en saillie du fût 42 lorsque l'élément d'appui 474 est en appui sur l'élément de butée 43.

De cette façon, l'organe de prélèvement peut assurer les opérations de découpe de tissus et de rétention de tissus, pendant l'insertion de la tête de verrouillage 422 dans la partie femelle.

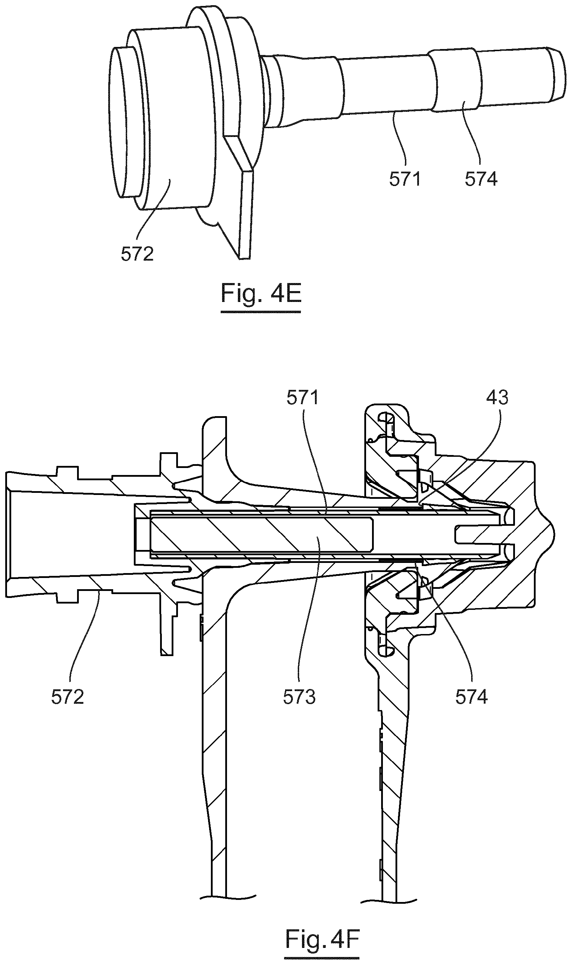

Les figures 4E et 4F illustrent un deuxième exemple d'organe de prélèvement, seul ou inséré dans la partie mâle 40.

Selon ce deuxième exemple, l'organe de prélèvement comprend :
- une aiguille 571, de type aiguille de biopsie ;
- un support de fixation 572 ;
- un élément poussoir 573 ;
- un élément d'appui 574.

Selon ce deuxième exemple, l'élément d'appui 574 prend la forme d'une bague solidarisée à l'aiguille 571. Une telle bague peut être plus ou moins haute (de l'ordre de quelques microns à quelques millimètres). Il peut s'agir d'un simple fil, d'un cordon de soudure, d'un cylindre creux, etc. Une telle bague peut également être fendue sur toute sa hauteur.

Par exemple, une telle bague peut être maintenue sur l'aiguille 571 par collage, soudure, clippage, etc. Si la bague est de type anneau élastique (par exemple Circlip ®) ou anneau à ressort, elle peut également être insérée dans une gorge ou un alésage formé sur l'organe de prélèvement.

Un tel élément d'appui 574 est complémentaire de l'élément de butée 43 de la partie mâle. La bague solidarisée à l'aiguille 571 peut ainsi venir prendre appui contre l'insert 425.

En particulier, la distance D entre l'élément d'appui 574 et l'extrémité distale de l'aiguille 571 est définie de sorte que l'extrémité distale de l'aiguille 571 dépasse en saillie du fût 42 lorsque l'élément d'appui 574 est en appui sur l'élément de butée 43.

De cette façon, l'organe de prélèvement peut assurer les opérations de découpe de tissus et de rétention de tissus, pendant l'insertion de la tête de verrouillage 422 dans la partie femelle.

On note que les deux exemples d'organe de prélèvement peuvent également être utilisés avec une autre partie mâle que celle décrite en relation avec les figures 4A à 4C, et en particulier avec une partie mâle ne présentent pas d'insert.

Par ailleurs, on note que le ou les éléments d'appui de l'organe de prélèvement, et/ou le ou les éléments de butée de la partie mâle, ne présentent pas nécessairement la forme d'une couronne. Comme illustré en figure 1, ces éléments peuvent comprendre un ou plusieurs ergots, ou tout autre élément pouvant remplir la fonction d'appui/butée. Selon un autre exemple, ces éléments peuvent prendre la forme d'un anneau élastique (par exemple de type Circlip ®) ou d'un anneau à ressort.

On note également que dans les modes de réalisation illustrés, l'organe de prélèvement comprend une aiguille de biopsie. Comme indiqué précédemment, il ne s'agit que d'un exemple de réalisation, et d'autres éléments de prélèvement pourraient être utilisés, comme un pointeau se terminant par une pointe apte à transpercer les tissus par exemple.

Finalement, on note que le support de la partie mâle peut prendre différentes formes, quelque soit le mode de réalisation envisagé. Par exemple, ce support peut prendre la forme d'un disque, ou comprendre un prolongement définissant une surface de marquage. Ainsi, le support peut être de plus ou moins grande taille, en fonction du type d'animal sur lequel sera apposée la marque. Cette surface de marquage permet notamment d'identifier l'animal grâce à des moyens d'identification visuels prenant la forme d'une inscription sous forme de caractères alphabétiques, numériques, ou de codes barres. D'autres moyens d'identification, comme des moyens d'identification électroniques, peuvent également être prévus.

Bien entendu, les différents modes de réalisation sont purement illustratifs, et non limitatifs. En particulier, il est possible de combiner les différents modes de réalisation envisagés.

## Revendications

1. Système d'identification animale, comprenant un dispositif d'identification animale et un organe de prélèvement de tissus animal, ledit dispositif d'identification animale comprenant une partie mâle comprenant un fût (12 ; 42) s'étendant à partir d'un support (11; 41) et se terminant par une tête de verrouillage (122 ; 422) destinée à être insérée dans une partie femelle pour fixer ledit dispositif d'identification à un animal, ledit fût étant traversé par un canal longitudinal permettant le passage dudit organe de prélèvement de tissus animal,
**caractérisé en ce que** le corps dudit fût est réalisé en un matériau au moins partiellement déformable, **en ce que** ledit fût (12 ; 42) comprend des moyens de rigidification comprenant au moins un élément de butée (13 ; 43) saillant dans ledit canal, localisé entre le milieu dudit fût et l'extrémité distale (124;424) de ladite tête, et **en ce que** ledit organe de prélèvement comprend au moins un élément d'appui (24; 374; 474; 575) complémentaire dudit au moins un élément de butée (13 ; 43) de ladite partie mâle, ledit au moins un élément de butée définissant une zone d'appui sur laquelle ledit au moins un élément d'appui dudit organe de prélèvement peut prendre appui lors d'un prélèvement de tissus animal, la distance entre ledit au moins un élément d'appui et l'extrémité distale de prélèvement dudit organe de prélèvement étant définie de sorte que ladite extrémité distale de prélèvement dépasse en saillie dudit fût de la partie mâle lorsque ledit au moins un élément d'appui est en appui contre ledit au moins un élément de butée.

2. Système d'identification animale selon la revendication 1, **caractérisé en ce que** ledit canal comprend au moins deux portions (34, 35) de sections distinctes, et **en ce que** ledit au moins un élément de butée correspond à la zone de jonction (33) entre lesdites portions de sections distinctes.

3. Système d'identification animale selon la revendication 2, **caractérisé en ce que** lesdites portions sont cylindriques et concentriques.

4. Système d'identification animale selon l'une quelconque des revendications 2 et 3, **caractérisé en ce que** l'épaisseur du matériau formant le corps dudit fût au niveau desdites portions de sections distinctes est sensiblement constante.

5. Système d'identification animale selon la revendication 4, **caractérisé en ce que** la distance entre ladite tête et ladite zone de jonction est adaptée de façon que le matériau formant le corps dudit fût au niveau de ladite zone de jonction vienne en butée contre la base de ladite partie femelle lorsque les parties mâle et femelle sont emboîtées.

6. Système d'identification animale selon l'une quelconque des revendications 1 à 5, **caractérisé en ce que** ladite tête comprend un insert (425) présentant une dureté supérieure à celle du matériau formant le corps dudit fût.

7. Système d'identification animale selon la revendication 6, **caractérisé en ce que** ledit insert (425) est un cône tronqué, dont une partie de la base définit ledit au moins un élément de butée.

8. Système d'identification animale selon l'une quelconque des revendications 6 et 7, **caractérisé en ce que** ledit insert comprend au moins un évidement.

9. Système d'identification animale selon l'une quelconque des revendications 1 à 8, **caractérisé en ce que** ledit élément d'appui est une bague solidarisée à une aiguille dudit organe de prélèvement.

## Patentansprüche

1. Tieridentifizierungssystem, umfassend eine Tieridentifizierungsvorrichtung und ein Organ zur Tiergewebeentnahme,
wobei die Tieridentifizierungsvorrichtung ein Einsteckteil aufweist, das einen Schaft (12; 42) aufweist, der sich von einem Träger (11; 41) erstreckt und mit einem Verriegelungskopf (122; 422) endet, der dazu bestimmt ist, in einen Aufnahmeteil eingesteckt zu werden, um die Tieridentifizierungsvorrichtung an einem Tier zu befestigen, wobei der Schaft von einem Längskanal durchquert ist, der den Durchtritt des Organs zur Tiergewebeentnahme ermöglicht,
**dadurch gekennzeichnet, dass** der Körper des Schaftes aus einem Material hergestellt ist, das mindestens teilweise verformbar ist,
dadurch, dass der Schaft (12; 42) Versteifungsmittel aufweist, die mindestens ein Anschlagelement (13; 43) aufweisen, das in den Kanal vorsteht, der zwischen der Mitte des Schaftes und dem distalen Ende (124; 424) des Kopfes angeordnet ist,
und dadurch, dass Organ zur Entnahme mindestens ein Abstützelement (24; 374; 474; 575) aufweist, das komplementär zu dem mindestens einen Anschlagelement (13; 43) des Einsteckteils ist, wobei das mindestens eine Anschlagelement einen Abstützbereich definiert, auf dem bei einer Tiergewebeentnahme dem mindestens einen Abstützelement des Organs zur Entnahme abgestützt werden kann,
wobei der Abstand zwischen dem mindestens einen Abstützelement und dem distalen Entnahmeende des Organs zur Entnahme derart definiert ist, dass das distale Entnahmeende von dem Schaft vorsteht, wenn das mindestens eine Abstützelement gegen das mindestens eine Anschlagelement abgestützt ist.

2. Tieridentifizierungssystem nach Anspruch 1, **dadurch gekennzeichnet, dass** der Kanal mindestens zwei Abschnitte (34, 35) mit verschiedenen Querschnitten aufweist und dadurch, dass das mindestens eine Anschlagelement dem Verbindungsbereich (33) zwischen den zwei Abschnitten mit verschiedenen Querschnitten entspricht.

3. Tieridentifizierungssystem nach Anspruch 2, **dadurch gekennzeichnet, dass** die Abschnitte zylindrisch und konzentrisch sind.

4. Tieridentifizierungssystem nach einem der Ansprüche 2 und 3, **dadurch gekennzeichnet, dass** die Dicke des Materials, das den Körper des Schaftes bildet, an den Abschnitten mit verschiedenen Querschnitten im Wesentlichen konstant ist.

5. Tieridentifizierungssystem nach Anspruch 4, **dadurch gekennzeichnet, dass** der Abstand zwischen dem Kopf und dem Verbindungsbereich derart ausgelegt ist, dass das Material, das den Körper des Schaftes an dem Verbindungsbereich bildet, gegen die Basis des Aufnahmeteils in Anschlag kommt, wenn das Einsteckteil und das Aufnahmeteil zusammengesteckt sind.

6. Tieridentifizierungssystem nach einem der Ansprüche 1 bis 5, **dadurch gekennzeichnet, dass** der Kopf einen Einsatz (425) aufweist, der eine größere Härte als das Material aufweist, das den Körper des Schaftes bildet.

7. Tieridentifizierungssystem nach Anspruch 6, **dadurch gekennzeichnet, dass** der Einsatz (425) ein Kegelstumpf ist, wovon ein Teil der Basis das mindestens eine Anschlagelement bildet.

8. Tieridentifizierungssystem nach einem der Ansprüche 6 und 7, **dadurch gekennzeichnet, dass** der Einsatz mindestens eine Ausnehmung aufweist.

9. Tieridentifizierungssystem nach einem der Ansprüche 1 bis 8, **dadurch gekennzeichnet, dass** das Abstützelement ein Ring ist, der mit einer Nadel des Organs zur Entnahme fest verbunden ist.

## Claims

1. Animal identification system, comprising an animal identification device and an animal tissue sample-taking member,
said animal identification device comprising a male part comprising a shaft (12; 42) extending from a base (11; 41) and ending in a locking head (122; 422) designed to be inserted into a female part to fixedly attach said identification device to an animal, said shaft being traversed by a longitudinal channel enabling the passage of said animal tissue sample-taking member, **characterized in that** the body of said shaft is made out of a material that is at least partially deformable,
**in that** said shaft (12; 42) comprises stiffening means comprising at least one abutment element (13; 43) protruding into said channel, located between the middle of said shaft and the distal extremity (124; 424) of said head,
and **in that** said sample-taking member comprises at least one bearing element (24; 374; 474; 575), complementary to said at least one abutment element (13; 43) of said male part,
said at least one abutment element defining a bearing area on which said at least one bearing element of said sample-taking member can take support when a sample of animal tissue is being taken,
the distance between said at least one bearing element and the distal sample-taking extremity of said sample-taking member being defined so that said distal sample-taking extremity projects beyond said shaft of the male part when said at least one bearing element takes support against said at least one abutment element.

2. Animal identification system according to claim 1, **characterized in that** said channel comprises at least two portions (34, 35) having distinct sections, and **in that** said at least one abutment element corresponds to the junction area (33) between said portions having distinct sections.

3. Animal identification system according to claim 2, **characterized in that** said distinct sections are cylindrical and concentric.

4. Animal identification system according to any one of the claims 2 and 3, **characterized in that** the thickness of the material forming the body of said shaft at said portions having distinct sections is substantially constant.

5. Animal identification system according to claim 4, **characterized in that** the distance between said head and said junction area is adapted so that the material forming the body of said shaft at said junction area abuts the base of said female part when the male and female parts are fitted together.

6. Animal identification system according to any one of the claims 1 to 5, **characterized in that** said head comprises an insert (425) with a hardness greater than that of the material forming the body of said shaft.

7. Animal identification system according to claim 6, **characterized in that** said insert (425) is a truncated cone, a part of the base of which defines said at least one abutment element.

8. Animal identification system according to any one of the claims 6 and 7, **characterized in that** said insert comprises at least one recess.

9. Animal identification system according to any one of the claims 1 to 8, **characterized in that** said bearing element is a ring fixedly attached to a needle of said sample-taking member.
